# EUROPÄISCHE PATENTSCHRIFT

(11) **EP 1 940 581 B1**
(45) Veröffentlichungstag und Bekanntmachung des Hinweises auf die Patenterteilung: **14.07.2010**
(21) Anmeldenummer: 06805437.8
(22) Anmeldetag: 17.10.2006
(51) Int. Cl.: B23K 33/00, B23P 6/00, F01D 5/00

(54) **VERFAHREN ZUR HERSTELLUNG EINER SCHWEISSVERBINDUNG**
METHOD OF PRODUCING A WELDED JOINT
PROCÉDÉ DE FABRICATION D UN RACCORD SOUDÉ

(30) Priorität: 26.10.2005 DE 102005051229
(43) Veröffentlichungstag der Anmeldung: 09.07.2008
(73) Patentinhaber: MTU Aero Engines GmbH, 80995 München (DE)
(72) Erfinder: EBERLEIN, Armin, 86836 Klosterlechfeld (DE); SCHNEIDER, Albert-Valentin, 80469 München (DE); ECKART, Dirk, 82515 Wofratshausen (DE)
(86) Internationale Anmeldenummer: PCT/DE2006/001831
(87) Internationale Veröffentlichungsnummer: WO 2007/048384

(56) Entgegenhaltungen:
- EP-A2- 1 138 431
- WO-A-2005/071227
- DE-A1- 4 225 443
- DE-A1- 10 343 760

## Beschreibung

Die Erfindung betrifft ein Verfahren zur Herstellung einer Schweißverbindung von Bauteilen einer Turbomaschine, insbesondere zur Bauteilreparatur, nach dem Oberbegriff des Anspruchs 1.

Die DE 42 25 443 C2 offenbart ein Verfahren zur Herstellung einer schweißverbindung von Bauteilen einer Turbomaschine, insbesondere bei der Reparatur eines Schaufelblatts einer Gasturbinenschaufel, wobei hierzu vom Schaufelblatt der Gasturbinenschaufel ein beschädigter Abschnitt entfernt und durch ein Ersatzteil ersetzt wird. Das Ersatzteil wird auch als Patch bezeichnet. Gemäß der DE 42 25 443 C2 ist in das Ersatzteil eine taschenartige Vertiefung eingebracht, wobei das Ersatzteil über die taschenartige Vertiefung auf das Schaufelblatt der zu reparierenden Gasturbinenschaufel aufgesteckt wird. Gemäß der DE 42 25 443 C2 wird ein Spalt, der sich im Bereich der taschenartigen Vertiefung zwischen dem Ersatzteil und dem Schaufelblatt der zu reparierenden Gasturbinenschaufel ausbildet, zum Verschweißen der beiden Bauteile mit Metallpulver gefüllt. Hierbei können sich Fehlstellen in der Schweißnaht ausbilden, ebenso können Eigenspannungen in die miteinander zu verbindenden Bauteile eingebracht werden.

Hiervon ausgehend liegt der vorliegenden Erfindung das Problem zu Grunde, ein neuartiges Verfahren zur Herstellung einer Schweißverbindung von Bauteilen einer Turbomaschine, insbesondere zur Bauteilreparatur, zu schaffen. Dieses Problem wird durch ein Verfahren gemäß Anspruch 1 gelöst. Erfindungsgemäß wird in das erste Bauteil zusätzlich zu der taschenartigen Vertiefung mindestens eine Aussparung eingebracht, welche den Bauteilquerschnitt im Bereich der auszubildenden Schweißnaht örtlich reduziert.

Im Sinne der hier vorliegenden Erfindung wird demnach vorgeschlagen, zusätzlich zu der taschenartigen Vertiefung eine Materialaussparung oder mehrere Materialaussparungen in das vorzugsweise als Ersatzteil dienende erste Bauteil einzubringen. Durch die in das erste Bauteil eingebrachte Aussparung bzw. die Aussparungen wird der Wärmeabfluss reduziert bzw. minimiert und es kann eine ungleichmäßige Temperaturverteilung entlang der auszubildenden Schweißnaht vermieden werden. Die Ausbildung von Fehlstellen an der Schweißnaht wird demnach minimiert. Weiterhin wird die Ausbildung von Eigenspannungen und damit von Bauteilverformungen beim Verschweißen der Bauteile minimiert.

Vorzugsweise wird eine erste Aussparung in eine der taschenartigen Vertiefung gegenüberliegenden Seitenwand des ersten Bauteils eingebracht, wobei diese erste Aussparung treppenförmig oder gerundet konturiert ist und sich in etwa in Richtung einer zwischen den Bauteilen auszubildenden Schweißnaht erstreckt.

Vorzugsweise werden zweite Aussparungen in die taschenartige Vertiefung begrenzende Seitenwände des ersten Bauteils eingebracht, wobei diese zweiten Aussparungen schlitzartig oder nutartig konturiert sind und sich in etwa quer zur Richtung der auszubildenden Schweißnaht erstrecken.

Nach einer vorteilhaften Weiterbildung der Erfindung wird in das erste Bauteil eine taschenartige Vertiefung eingebracht, deren Kontur an die Kontur eines in die taschenartige Vertiefung einzusteckenden Endabschnitts des zweiten Bauteils derart angepasst ist, dass dann, wenn das erste Bauteil auf das zweite Bauteil aufgesteckt ist, ein derart minimaler Spalt zwischen der taschenartigen Vertiefung des ersten Bauteils und dem Endabschnitt des zweiten Bauteils ausgebildet ist, dass die Bauteile im Bereich der taschenartigen Vertiefung bündig aneinander liegen. Hierdurch kann die Qualität der Schweißverbindung gegenüber dem aus dem Stand der Technik bekannten Verfahren abermals verbessert werden. Insbesondere wird die Ausbildung von Fehlstellen und das Einbringen von Eigenspannungen in die miteinander zu verbindenden Bauteile vermieden.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine zu reparierende Gasturbinenschaufel zusammen mit einem an ein Schaufelblatt derselben zu schweißendes Ersatzteil;
- Fig. 2: ein Detail der Anordnung gemäß Fig. 1 nach einem ersten Ausfüh- rungsbeispiel der Erfindung;
- Fig. 3: ein Detail der Anordnung gemäß Fig. 1 nach einem zweiten Aus- führungsbeispiel der Erfindung;
- Fig. 4: ein Detail der Anordnung gemäß Fig. 1 nach einem dritten Aus- führungsbeispiel der Erfindung;
- Fig. 5: das Ersatzteil der Fig. 4 in perspektivischer Ansicht;
- Fig. 6: ein Detail der Anordnung gemäß Fig. 1 nach einem weiteren Aus- führungsbeispiel der Erfindung; und
- Fig. 7: eine weitere zu reparierende Gasturbinenschaufel zusammen mit einem an ein Schaufelblatt derselben zu schweißendes Ersatz- teil.

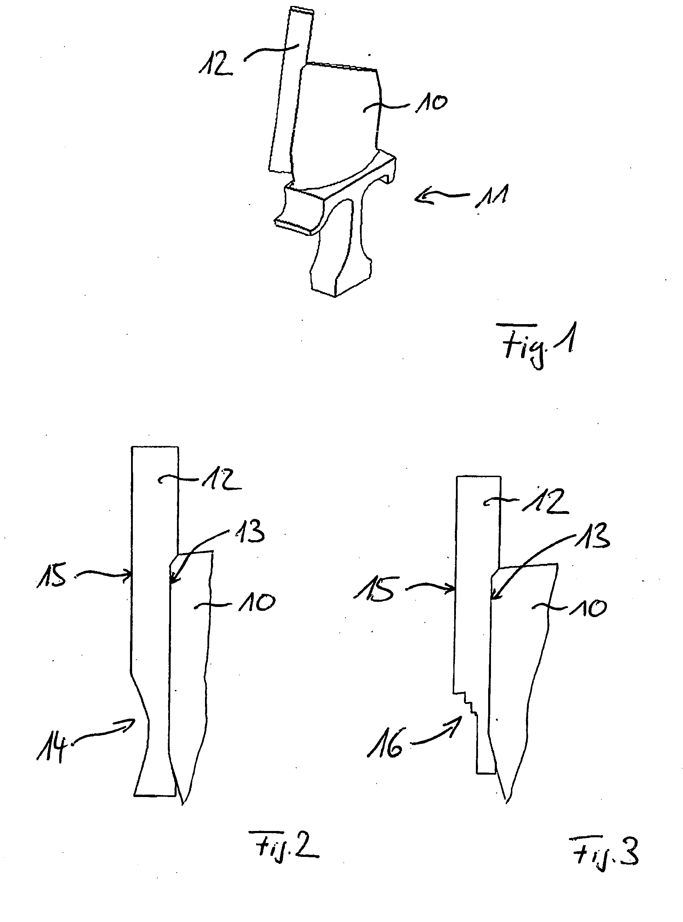

Die Erfindung betrifft ein Verfahren zur Herstellung einer Schweißverbindung von Bauteilen einer Turbomaschine. Insbesondere dient das Verfahren der Bauteilreparatur von Gasturbinenschaufeln im Bereich eines Schaufelblatts, wobei hierzu (siehe Fig. 1) von einem Schaufelblatt 10 einer zu reparierenden Gasturbinenschaufel 11 ein beschädigter Abschnitt entfernt bzw. abgetrennt wird, der durch ein Ersatzteil 12 durch Anschweißen desselben ersetzt wird. Nachfolgend wird die Erfindung für diesen bevorzugten Anwendungsfall beschrieben, wobei jedoch bereits an dieser Stelle darauf hingewiesen werden soll, dass mit dem erfindungsgemäßen Verfahren beliebige Bauteile miteinander verschweißt werden können.

Zur Reparatur einer Gasturbinenschaufel 11 mit Hilfe des erfindungsgemäßen Verfahrens wird, wie bereits erwähnt, zuerst von dem Schaufelblatt 10 der zu reparierenden Gasturbinenschaufel 11 ein beschädigter Schaufelblattabschnitt abgetrennt. Dieser beschädigte Schaufelblattabschnitt soll durch ein Ersatzteil 12, welches auch als Patch bezeichnet wird, dadurch ersetzt werden, dass das Ersatzteil 12 mit dem verbleibenden Schaufelblatt 11 verschweißt wird. Nach dem Verschweißen der Bauteile erfolgt noch eine Oberflächenbearbeitung zumindest des Ersatzteils 12, um am Schaufelblatt 10 gewünschte strömungstechnische Oberflächen auszubilden.

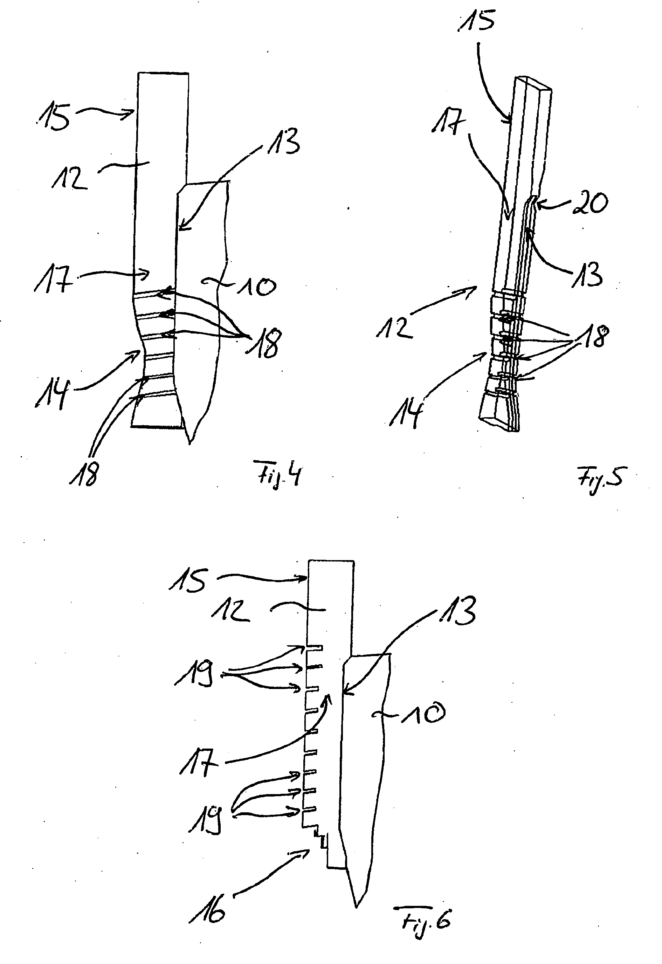

Das verbleibende Schaufelblatt 11 wird zumindest abschnittsweise, nämlich zumindest im Bereich eines durch Abtrennen des beschädigten Schaufelblattabschnitts gebildeten Trennbereichs vermessen, wobei abhängig hiervon in das Ersatzteil 12 eine taschenartige Vertiefung 13 (siehe Fig. 5) eingebracht wird. Die taschenartige Vertiefung 13 wird in Ihrer Kontur an den Trennbereich des Schaufelblatts 1.0 angepasst, der nach Abtrennen des beschädigten Schaufelblattabschnitts am Schaufelblatt 10 ausgebildet wird. Das Ersatzteil 12 wird mit dieser taschenartigen Vertiefung 13 auf den Trennbereich des Schaufelblatts 10 aufgesteckt, und zwar derart, dass eine Endkante bzw. Trennkante des Schaufelblatts an einem Grund der taschenartigen Vertiefung 13 des Ersatzteils 12 aufsitzt. Dabei ist die Kontur der taschenartigen Vertiefung 13 derart an die Kontur des Trennbereichs des Schaufelblatts 10 angepasst, dass ein minimaler Spalt zwischen der taschenartigen Vertiefung 13 des Ersatzteils 12 und dem Schaufelblatt 11 der Gasturbinenschaufel 10 ausgebildet ist, und zwar derart, dass das Ersatzteil 12 und das Schaufelblatt 10 im Bereich der taschenartigen Vertiefung 13 bündig aneinander anliegen..Das Ersatzteil 12 sowie das Schaufelblatt 10 werden dann ohne zusätzlichen Schweißwerkstoff, insbesondere ohne Einsatz von Schweißpulver, miteinander verschweißt.

Die in das Ersatzteil eingebrachte, taschenartige Vertiefung 13 kann derart konturiert werden, dass dieselbe entlang eines Schweißnahtverlaufs, entlang dessen das Ersatzteil 12 sowie das Schaufelblatt 10 miteinander verbunden werden, in etwa eine gleichbleibende Materialdicke aufweist. Hierdurch kann dann beim Schweißen entlang des Schweißnahtverlaufs mit in etwa konstanten Schweißparametern geschweißt werden.

In das Ersatzteil 12, nämlich in äußere Oberflächen von Seitenwänden desselben, sind Ausnehmungen in Form von Schlitzen und/oder Nuten und/oder Stufen und/oder Rundungen und/oder Bohrungen eingebracht. Hierdurch ist es möglich, beim Schweißen einen Wärmeabfluss von den miteinander zu verbindenden Bauteilen 11, 12 zu minimieren und während des gesamten Schweißvorgangs eine in etwa konstante Prozesstemperatur für das Schweißen aufrechtzuerhalten. Durch das Einbringen der Schlitze und/oder Nuten und/oder Stufen und/oder Rundungen und/oder Bohrungen in das Ersatzteil 12 können Verformungen des Ersatzteils 12 beim Schweißen vermieden werden. Hierdurch wird die erzielbare Schweißqualität verbessert.

Im Ausführungsbeispiel der Fig. 2 ist in das als Ersatzteil 12 dienende erste Bauteil zusätzlich zu der taschenartigen Vertiefung 13 eine Aussparung 14 eingebracht, wobei die Aussparung 14 an einer der taschenartigen Vertiefung 13 gegenüberliegenden Seitenwand 15 des Ersatzteils 12 in dasselbe eingebracht ist. Die Aussparung 14 ist im Ausführungsbeispiel der Fig. 2 gerundet, insbesondere kreissegmentförmig, konturiert. Im Ausführungsbeispiel der Fig. 2 ist die Aussparung 14 demnach als Rundung ausgeführt. Die Aussparung 14 erstreckt sich im Wesentlichen in radialer Richtung des Schaufelblatts 10 bzw. der Gasturbinenschaufel 11 sowie in Richtung einer zwischen dem Schaufelblatt 10 und dem Ersatzteil 12 auszubildenden Schweißnaht. Die Aussparung 14 ist gemäß Fig. 2 einem radial innenliegenden Abschnitt der Seitenwand 15 zugeordnet.

Im Ausführungsbeispiel der Fig. 3 ist ebenfalls in die der taschenartigen Vertiefung 13 gegenüberliegende Seitenwand 15 des Ersatzteils 12 eine Aussparung 16 eingebracht, die im Unterschied zur Aussparung 14 des Ausführungsbeispiels der Fig. 2 nicht gerundet sondern vielmehr treppenförmig bzw. stufenförmig konturiert ist. Die Aussparung 16 erstreckt sich wiederum im Wesentlichen in radialer Richtung des Schaufelblatts 10 bzw. der Gasturbinenschaufel 11 sowie in Richtung einer zwischen dem Schaufelblatt 10 und dem Ersatzteil 12 auszubildenden Schweißnaht und ist gemäß Fig. 3 einem radial innenliegenden Abschnitt der Seitenwand 15 zugeordnet.

Im Ausführungsbeispiel der Fig. 4 und 5 sind in das Ersatzteil 12 zusätzlich zu der gerundeten Ausnehmung 14, die im Bereich einer der Vertiefung 13 gegenüberliegenden Seitenwand 15 des Ersatzteils 12 ausgebildet ist, in das Ersatzteil 12 im Bereich von die taschenartige Vertiefung 13 begrenzenden, sich gegenüberliegenden Seitenwänden 17 weitere Ausnehmungen 18 eingebracht, die schlitzartig bzw. nutartig konturiert sind. Im Ausführungsbeispiel der Fig. 4 und 5 erstrecken sich die schlitzartigen bzw. nutartigen Ausnehmungen 18 im Wesentlichen in Axialrichtung der Schaufelblatts 10 der zu reparierenden Gasturbinenschaufel 11 und damit in etwa quer zu einer zwischen dem Schaufelblatt 10 und dem Ersatzteil 12 auszubildenden Schweißnaht.

Weiterhin ist das Ersatzteil des Ausführungsbeispiels der Fig. 4 und 5, wie Fig. 5 entnommen werden kann, an den sich gegenüberliegenden Seitenwänden 17 an einem radial innenliegenden Abschnitt derselben durch weitere, vorzugsweise gerundet konturierte Materialaussparungen tailliert ausgeführt, wobei die schlitzartigen bzw. nutartigen Ausnehmungen 18 ausschließlich an diesem radial innenliegenden, taillierten Abschnitt der sich gegenüberliegenden Seitenwände 17 ausgebildet sind. Im Unterschied zum Ausführungsbeispiel der Fig. 4 und 5 können sich die schlitzartigen Ausnehmungen 18 auch über die gesamte Höhe der Vertiefung 13 sowie die gesamte radiale Erstreckung des Ersatzteils 12 erstrecken.

Im Ausführungsbeispiel der Fig. 4 und 5 ist eine weitere Aussparung 20 an einem radial außenliegenden Abschnitt der taschenartigen Vertiefung 13 vorgesehen, um im kritischen Umgangsbereich zu einer Schaufelspitze des Schaufelblatts 11 Verformungen zu vermeiden.

Ein weiteres Ausführungsbeispiel der Erfindung zeigt Fig. 6. Im Ausführungsbeispiel der Fig. 6 sind in das Ersatzteil 12 einerseits eine treppenartig bzw. stufenartig konturierte Aussparung 16 eingebracht und andererseits mehrere schlitzartige bzw. nutartige Aussparungen 19. Im Ausführungsbeispiel der Fig. 6 sind die schlitzartigen bzw. nutartigen Aussparungen 19 in die Seitenwand 15 des Ersatzteils 12, die der taschenartigen Vertiefung 13 gegenüberliegt, eingebracht. Die schlitzartigen bzw. nutartigen Aussparungen 19 erstrecken sich gemäß Fig. 6 im wesentlichen in Umfangsrichtung der zu reparierenden Gasturbinenschaufel 11 bzw. des Schaufelblatts 10 derselben, und zwar über die gesamte radiale Erstreckung der taschenartigen Vertiefung 13.

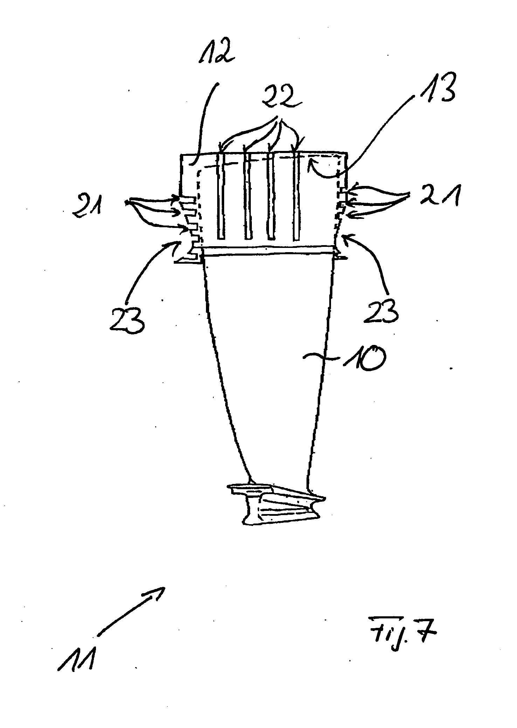

In den Ausführungsbeispielen der Fig. 1 bis 6 erstreckt sich das Ersatzteil 12 ausschließlich über den Bereich einer Kante des Schaufelblatts 10 der zu reparierenden Gasturbinenschaufel 11, nämlich entweder im Bereich einer Strömungseintrittskante oder im Bereich einer Strämungsaustrittskante desselben. Fig. 7 zeigt hingegen ein Ausführungsbeispiel, bei welchem sich das Ersatzteil 12 über die gesamte axiale Länge des Schaufelblatts 10 der zu reparierenden Gasturbinenschaufel 11 erstreckt, nämlich zwischen der Strömungseintrittskante und der Strömungsaustrittskante desselben. Selbstverständlich verfügt auch das Ersatzteil 12 des Ausführungsbeispiels der Fig. 7 über eine taschenartige Vertiefung 13. In das Ersatzteil 12 des Ausführungsbeispiels der Fig. 7 sind wiederum mehrere schlitzartige bzw. nutartige Aussparungen eingebracht, nämlich erste schlitzartige Aussparungen 21 benachbart zu der Strömungseintrittskante bzw. der Strömungsaustrittskante und zweite schlitzartige Aussparungen 22 benachbart zu einer Schaufelspitze, wobei die ersten Aussparungen 21 im wesentlichen in Umfangsrichtung und die zweiten Aussparungen 22 im wesentlichen in Radialrichtung verlaufen. Weiterhin sind sowohl benachbart zur Strömungseintrittskante als auch benachbart zur Strömungsaustrittskante gerundet konturierte Aussparungen 23 in das Ersatzteil 12 eingebracht, die sich im Wesentlichen in radialer Richtung des Schaufelblatts 10 bzw. der Gasturbinenschaufel 11 erstrecken. Die zweiten schlitzartigen Aussparungen 22 und die gerundet konturierten Aussparungen 23 verlaufen in etwa quer zur Richtung einer auszubildenden Schweißnaht. Die ersten schlitzartigen Aussparungen 21 verlaufen hingegen in etwa in Richtung der auszubildenden Schweißnaht. Die Aussparungen 21, 22 und 23 sind in die taschenartige Vertiefung begrenzende Seitenwände des Ersatzteils 12 eingebracht.

Beim Schweißen kann vorgesehen werden, dass die miteinander zu verbindenden Bauteile 11, 12 vor dem eigentlichen Schweißen mit Hilfe einer Wärmequelle auf eine Prozesstemperatur vorgewärmt werden, wobei während des Schweißens die beiden Bauteile 11, 12 ebenfalls durch Verwendung einer Wärmequelle auf der Prozesstemperatur gehalten werden. Auch kann nach Beendigung des Schweißvorgangs ein Nachwärmen der miteinander verbundenen Bauteile durchgeführt werden. Als Wärmequelle kann z.B. eine induktive Wärmequelle, eine elektrische Heizspirale oder ein Laser verwendet werden.

Wie bereits erwähnt, wird vor Ausbildung der Schweißnaht das Ersatzteil 12 über die taschenartige Vertiefung 13 auf das zu reparierende Schaufelblatt 1.0, von welchem der beschädigte Schaufelblattabschnitt entfernt wurde, aufgesteckt. Nach dem Aufstecken kann das Ersatzteil 12 auf dem Schaufelblatt 10 mit Hilfe von Heftschweißpunkten positioniert werden. Das Ersatzteil 12 kann auch mit Hilfe speziell ausgebildeter Halteeinrichtungen auf dem Schaufelblatt 10 angeordnet und bei dem Schweißen gehalten werden. Auch ist es möglich, Anlaufbleche sowie Ablaufbleche für die Schweißnahtbahn in das Ersatzteil 12 zu integrieren.

Handelt es sich bei dem Ersatzteil um einen Patch, der sich zwischen einer Strömungseintrittskante bzw. einer Strömungsaustrittskante des Schaufelblatts und einer Schaufelspitze desselben erstreckt, so kann die Schweißnaht beliebig geführt werden, nämlich einerseits von der Strömungseintrittskante bzw. Strömungsaustrittskante zur Schaufelspitze oder auch andersherum von Schaufelspitze zur Strömungseintrittskante bzw. Strömungsaustrittskante des Schaufelblatts.

Mit Hilfe des erfindungsgemäßen Verfahrens kann das Verbinden von Bauteilen mit Hilfe einer Schweißverbindung optimiert werden. Insbesondere bei der Ausbildung von Schweißverbindungen an Bauteilen einer Gasturbine kann mit gleichbleibenden Schweißparametern gearbeitet werden. Das Ausbilden von Fehlstellen sowie das Einbringen von Eigenspannungen beim Schweißen in die miteinander zu verbindenden Bauteile wird minimiert. Hierdurch kann insgesamt die Schweißqualität verbessert werden.

## Patentansprüche

1. Verfahren zur Herstellung einer Schweißverbindung von Bauteilen einer Turbomaschine, insbesondere zur Bauteilreparatur, wobei Bauteile entlang gemeinsamer Kanten derart miteinander verschweißt werden, dass in ein erstes Bauteil (12), insbesondere in ein Ersatzteil, eine taschenartige Vertiefung (13) eingebracht wird, mit welcher das erste Bauteil (12) auf ein zweites Bauteil (11), insbesondere ein zu reparierendes Bauteil, aufgesteckt wird, sodass das zweite Bauteil mit einer Endkante auf einem Grund der taschenartigen Vertiefung (13) anliegt, und dass anschließend das erste Bauteil (12) und das zweite Bauteil (11) miteinander verschweißt werden,
**dadurch gekennzeichnet,**
**dass** in das erste Bauteil (12) zusätzlich zu der taschenartigen Vertiefung (13) mindestens eine Aussparung (14, 16, 18, 19, 21, 22, 23) eingebracht wird, welche den Bauteilquerschnitt im Bereich der auszubildenden Schweißnaht örtlich reduziert.

2. Verfahren nach Anspruch 1,
**dadurch gekennzeichnet,**
**dass** eine erste Aussparung (14, 16) in eine der taschenartigen Vertiefung (13) gegenüberliegende Seitenwand (15) des ersten Bauteils (12) eingebracht wird, wobei diese erste Aussparung (14, 16) treppenförmig oder gerundet konturiert ist.

3. Verfahren nach Anspruch 2,
**dadurch gekennzeichnet,**
**dass** sich die erste Aussparung (14, 16) in etwa in Richtung einer zwischen den Bauteilen auszubildenden Schweißnaht erstreckt.

4. Verfahren nach einem oder mehreren der Ansprüche 1 bis 3,
**dadurch gekennzeichnet,**
**dass** zweite Aussparungen (18, 19) in mindestens eine die taschenartige Vertiefung begrenzende Seitenwand (15, 17) des ersten Bauteils (12) eingebracht werden, wobei diese zweiten Aussparungen (18, 19) schlitzartig oder nutartig konturiert sind.

5. Verfahren nach Anspruch 4,
**dadurch gekennzeichnet,**
**dass** sich die zweiten Aussparung (18, 19) in etwa quer zur Richtung der auszubildenden Schweißnaht erstrecken.

6. Verfahren nach einem oder mehreren der Ansprüche 1 bis 5,
**dadurch gekennzeichnet,**
**dass** das erste Bauteil (12) an sich gegenüberliegenden, die taschenartige Vertiefung (13) begrenzenden Seitenwänden (17), die in etwa senkrecht zur der taschenartigen Vertiefung (13) gegenüberliegenden Seitenwand (15) verlaufen, durch Aussparungen tailliert ist.

7. Verfahren nach einem oder mehreren der Ansprüche 1 bis 6,
**dadurch gekennzeichnet,**
**dass** dann, wenn es sich beim ersten Bauteil (12) um ein Ersatzteil zur Reparatur eines Schaufelblatts (11) eines als Gasturbinenschaufel ausgebildeten zweiten Bauteils (10) handelt, sich die erste Aussparung (14, 16) im wesentlichen in Radialrichtung des Schaufelblatts und die zweiten Aussparung (18, 19) im wesentlichen in Axialrichtung und/oder in Umfangsrichtung des Schaufelblatts erstrecken.

8. Verfahren nach Anspruch 1,
**dadurch gekennzeichnet,**
**dass** in mehrere, die taschenartige Vertiefung begrenzende Seitenwände des ersten Bauteils (12) Aussparungen (21, 22, 23) eingebracht werden, nämlich schlitzartig öder nutartig konturierte Aussparungen (21, 22) und gerundet konturierte Aussparungen (23).

9. Verfahren nach einem oder mehreren der Ansprüche 1 bis 8,
**dadurch gekennzeichnet,**
**dass** in das erste Bauteil (12) eine taschenartige Vertiefung (13) eingebracht wird, deren Kontur an die Kontur eines in die taschenartige Vertiefung einzusteckenden Endabschnitts des zweiten Bauteils (11) derart angepasst ist, dass dann, wenn das erste Bauteil auf das zweite Bauteil aufgesteckt ist, ein derart minimaler Spalt zwischen der taschenartigen Vertiefung des ersten Bauteils und dem Endabschnitt des zweiten Bauteils ausgebildet ist, dass die Bauteile im Bereich der taschenartigen Vertiefung bündig aneinander liegen.

10. Verfahren nach einem oder mehreren der Ansprüche 1 bis 9,
**dadurch gekennzeichnet,**
**dass** die beiden Bauteile ohne zusätzlichen Schweißwerkstoff, insbesondere schweißpulverlos, miteinander verschweißt werden.

11. Verfahren nach einem oder mehreren der Ansprüche 1 bis 10,
**dadurch gekennzeichnet,**
**dass** das erste Bauteil bzw. die taschenartige Vertiefung derart konturiert ist, dass dasselbe bzw. dieselbe entlang eines Schweißnahtverlaufs eine in etwa gleichbleibende Materialdicke aufweist, sodass entlang des Schweißnahtverlaufs mit in etwa konstanten Schweißparametern geschweißt wird.

12. Verfahren nach einem oder mehreren der Ansprüche 1 bis 11,
**dadurch gekennzeichnet,**
**dass** vor dem eigentlichen Schweißen die beiden Bauteile zumindest im Bereich des Schweißnahtverlaufs auf eine Prozesstemperatur vorgewärmt werden, und dass während des Schweißen die beiden Bauteile erwärmt werden, um dieselben zumindest im Bereich des Schweißnahtverlaufs auf dieser Prozesstemperatur zu halten.

13. Verfahren nach einem oder mehreren der Ansprüche 1 bis 12,
**dadurch gekennzeichnet,**
**dass** zur Bauteilreparatur einer Gasturbinenschaufel eine Schweißverbindung zwischen einem als Ersatzteil bzw. Patch ausgebildeten ersten Bauteil und einem Schaufelblatt eines als Gasturbinenschaufel ausgebildeten zweiten Bauteils ausgebildet wird, wobei hierzu nach dem Abtrennen eines durch das Ersatzteil zu ersetzenden Schaufelblattabschnitts das verbleibende Schaufelblatt zumindest abschnittsweise vermessen wird, um abhängig hiervon die taschenartige Vertiefung in das Ersatzteil einzuarbeiten.

## Claims

1. Method of producing a welded joint between components of a turbine-type machine, in particular for component repair, wherein components are welded to one another along common edges in such a way that there is introduced into a first component (12), in particular into a replacement part, a pocket-like recess (13), by which the first component (12) is fitted onto a second component (11), in particular a component that is to be repaired, so that the second component lies with an end edge on a base of the pocket-like recess (13), and that the first component (12) and the second component (11) are then welded to one another,
**characterized in that**
into the first component (12) there is introduced, in addition to the pocket-like recess (13), at least one cutout (14, 16, 18, 19, 21, 22, 23) that locally reduces the component cross-section in the region of the weld seam that is to be formed.

2. Method according to claim 1,
**characterized in that**
a first cutout (14, 16) is introduced into a side wall (15) of the first component (12) that lies opposite the pocket-like recess (13), this first cutout (14, 16) being contoured in a stepped or rounded manner.

3. Method according to claim 2,
**characterized in that**
the first cutout (14, 16) extends approximately in the direction of a weld seam that is to be formed between the components.

4. Method according to one or more of claims 1 to 3,
**characterized in that**
two cutouts (18, 19) are introduced into at least one side wall (15, 17) of the first component (12) that delimits the pocket-like recess, these two cutouts (18, 19) being contoured in a slot- or groove-like manner.

5. Method according to claim 4,
**characterized in that**
the second cutout (18, 19) extend approximately transversely of the direction of the weld seam that is to be formed.

6. Method according to one or more of claims 1 to 5,
**characterized in that**
the first component (12) at mutually opposite side walls (17), which delimit the pocket-like recess (13) and extend approximately at right angles to the side wall (15) lying opposite the pocket-like recess (13), is waisted by means of cutouts.

7. Method according to one or more of claims 1 to 6,
**characterized in that**,
if the first component (12) is a replacement part for repairing a blade (11) of a second component (10) in the form of a gas turbine blade, the first cutout (14, 16) extends substantially in the radial direction of the blade and the second cutout (18, 19) extends substantially in the axial and/or peripheral direction of the blade.

8. Method according to claim 1,
**characterized in that**
into a plurality of side walls of the first component (12) that delimit the pocket-like recess there are introduced cutouts (21, 22, 23), namely cutouts (21, 22) contoured in a slot- or groove-like manner and cutouts (23) contoured in a rounded manner.

9. Method according to one or more of claims 1 to 8,
**characterized in that**
into the first component (12) there is introduced a pocket-like recess (13), the contour of which is adapted in such a way to the contour of an end portion of the second component (11) that is to be inserted into the pocket-like recess that, when the first component is fitted onto the second component, a minimal gap is formed between the pocket-like recess of the first component and the end portion of the second component,such that the components in the region of the pocket-like recess lie flush against one another.

10. Method according to one or more of claims 1 to 9,
**characterized in that**
the two components are welded to one another without additional welding material, in particular without welding powder.

11. Method according to one or more of claims 1 to 10,
**characterized in that**
the first component and/or the pocket-like recess is contoured in such a way that it has an approximately constant material thickness along the course of the weld seam, so that along the course of the weld seam welding is carried out with approximately constant welding parameters.

12. Method according to one or more of claims 1 to 11,
**characterized in that**
prior to the actual welding operation the two components at least in the region of the weld seam course are preheated to a process temperature, and that during the welding operation the two components are heated to keep them at this process temperature at least in the region of the weld seam course.

13. Method according to one or more of claims 1 to 12,
**characterized in that**
for component repair of a gas turbine blade a welded joint is formed between a first component in the form of a replacement part and/or patch and a blade of a second component in the form of a gas turbine blade, wherein for this purpose, after separation of a blade portion that is to be replaced by the replacement part, the remaining blade is measured at least in sections in order in dependence thereon to work the pocket-like recess into the replacement part.

## Revendications

1. Procédé de réalisation d'un assemblage soudé de pièces d'une turbomachine, en particulier pour la réparation d'une pièce, lesdites pièces étant soudées l'une à l'autre le long de leurs bords communs, de telle sorte que dans une première pièce (12), en particulier dans une pièce de réparation, est ménagé un creux (13) en forme de poche, par lequel la première pièce (12) est appliquée sur une deuxième pièce (11), en particulier une pièce à réparer, de telle sorte que la deuxième pièce est en appui avec un bord d'extrémité contre un fond du creux (13) en forme de poche, et de telle sorte qu'ensuite, la première pièce (12) et la deuxième pièce (11) sont soudées l'une à l'autre, **caractérisé en ce que** dans la première pièce (12) est réalisé, en plus du creux (13) en forme de poche, au moins un évidement (14, 16, 18, 19, 21, 22, 23), qui réduit localement la section de la pièce dans la zone du cordon de soudure à réaliser.

2. Procédé selon la revendication 1, **caractérisé en ce qu'**un premier évidement (14, 16) est ménagé dans une paroi latérale (15), face au creux (13) en forme de poche, de la première pièce (12), ledit premier évidement (14, 16) ayant un contour en forme de gradins ou arrondi.

3. Procédé selon la revendication 2, **caractérisé en ce que** le premier évidement (14, 16) s'étend sensiblement dans la direction vers un cordon de soudure à réaliser entre les pièces.

4. Procédé selon une ou plusieurs des revendications 1 à 3, **caractérisé en ce que** des deuxièmes évidements (18, 19) sont ménagés dans au moins une paroi latérale (15, 17), délimitant le creux en forme de poche, de la première pièce (12), lesdits deuxièmes évidements (18, 19) étant configurés en forme de fente ou de rainure.

5. Procédé selon la revendication 4, **caractérisé en ce que** les deuxièmes évidements (18, 19) s'étendent sensiblement transversalement à la direction du cordon de soudure à réaliser.

6. Procédé selon une ou plusieurs des revendications 1 à 5, **caractérisé en ce que** la première pièce (12) est entaillée par des évidements sur ses parois latérales (17) opposées, qui délimitent le creux (13) en forme de poche et qui s'étendent sensiblement perpendiculairement à la paroi latérale (15), face au creux (13) en forme de poche.

7. Procédé selon une ou plusieurs des revendications 1 à 6, **caractérisé en ce que**, dans l'hypothèse où la première pièce (12) est une pièce de réparation pour la réparation d'une pale (11) d'une deuxième pièce (10), réalisée sous la forme d'une aube de turbine à gaz, le premier évidement (14, 16) s'étend sensiblement dans la direction radiale de la pale et le deuxième évidement (18, 19) s'étend sensiblement dans la direction axiale et/ou dans la direction circonférentielle de la pale.

8. Procédé selon la revendication 1, **caractérisé en ce que** dans plusieurs parois latérales de la première pièce (12), lesquelles délimitent le creux en forme de poche, sont ménagés des évidements (21, 22, 23), à savoir des évidements (21, 22) configurés en forme de fente ou de rainure et des évidements (23) ayant un contour arrondi.

9. Procédé selon une ou plusieurs des revendications 1 à 8, **caractérisé en ce que** dans la première pièce (12) est ménagé un creux (13) en forme de poche, dont le contour est ajusté au contour d'une partie d'extrémité de la deuxième pièce (11), à appliquer dans le creux en forme de poche, de telle sorte que, lorsque la première pièce est appliquée sur la deuxième pièce, il se forme entre le creux en forme de poche de la première pièce et la zone d'extrémité de la deuxième pièce, une fente minimum de telle sorte que les pièces sont situées à fleur dans la zone du creux en forme de poche.

10. Procédé selon une ou plusieurs des revendications 1 à 9, **caractérisé en ce que** les deux pièces sont soudées l'une à l'autre sans matériau de soudure supplémentaire, en particulier sans flux de poudre.

11. Procédé selon une ou plusieurs des revendications 1 à 10, **caractérisé en ce que** la première pièce ou le creux (13) en forme de poche ont un contour tel que ladite pièce ou ledit creux possèdent une épaisseur de matière sensiblement uniforme le long d'un tracé de cordon de soudure, de telle sorte que le soudage est effectué avec des paramètres de soudage sensiblement constants le long du tracé du cordon de soudure.

12. Procédé selon une ou plusieurs des revendications 1 à 11, **caractérisé en ce que**, avant le soudage proprement dit, les deux pièces sont préchauffées à la température du processus au moins dans la zone du tracé du cordon de soudure, et **en ce que**, pendant le soudage, les deux pièces sont chauffées pour conserver, au moins dans la zone du tracé du cordon de soudure, ladite température de processus.

13. Procédé selon une ou plusieurs des revendications 1 à 12, **caractérisé en ce que**, pour la réparation d'une aube de turbine à gaz, on réalise un assemblage soudé entre une première pièce, conçue comme pièce de réparation ou patch, et une pale d'une deuxième pièce, conçue en forme d'aube de turbine à gaz, sachant qu'à cet effet, après le sectionnement d'une partie de pale à remplacer par la pièce de réparation, la pale restante est mesurée au moins par zones pour ménager, en fonction de ladite mesure, le creux en forme de poche dans la pièce de réparation.
